Europäisches Patentamt

European Patent Office

Office européen des brevets

(19)

(11) Veröffentlichungsnummer: **0 062 137**
**B1**

(12) **EUROPÄISCHE PATENTSCHRIFT**

(45) Veröffentlichungstag der Patentschrift:
02.01.85

(51) Int. Cl.³: **B 62 D 25/16**

(21) Anmeldenummer: **82100428.0**

(22) Anmeldetag: **22.01.82**

(54) **Kotflügel für Kraftfahrzeuge, insbesondere Lastkraftwagen.**

(30) Priorität: **08.04.81 DE 8110658 U**

(43) Veröffentlichungstag der Anmeldung:
**13.10.82 Patentblatt 82/41**

(45) Bekanntmachung des Hinweises auf die Patenterteilung:
**02.01.85 Patentblatt 85/1**

(84) Benannte Vertragsstaaten:
**AT BE CH DE FR GB IT LI LU NL SE**

(56) Entgegenhaltungen:
**DE - A - 1 755 262**
**DE - U - 1 954 752**
**DE - U - 1 983 968**
**FR - A - 2 440 306**

(73) Patentinhaber: **Kotflügelfabrik H. Köver GmbH & Co KG,
Estetalstrasse 45/47, D-2150 Buxtehude (DE)**

(72) Erfinder: **Jürges, Henning, Am Rugen End 13,
D-2150 Buxtehude (DE)**

(74) Vertreter: **Siebert . Grättinger & Bockhorni,
Postfach 1649 Almeidaweg 35, D-8130 Starnberg
(München) (DE)**

BUNDESDRUCKEREI BERLIN

**Beschreibung**

Die Erfindung betrifft einen Kotflügel für Kraftfahrzeuge, insbesondere Lastkraftwagen, mit einem im Kotflügelaußenbereich angeordneten Spritzschutzrand, der an seiner Außenseite radial eingezogen ist, wobei der Kotflügel an seiner dem Rad zugewandten Seite mit in Umfangsrichtung des Rades verlaufenden Rippen versehen ist.

Ein derartiger Kotflügel ist aus FR-A-2 440 306 bekannt. Die an seiner Unterseite vorgesehenen Rippen sind über den gesamten Kotflügel verteilt, haben untereinander gleichen Abstand und dienen der Kanalisierung der Luftströmung und damit des Spritzwasser.

Ein anderer bekannter Spritzschutzrand (DE-GM 1 954 752) besitzt eine glatte Innenseite und daher nur eine begrenzte Wirksamkeit als Schutzvorrichtung gegen Abspritzen und Absprühen von Wasser; er dient in erster Linie als Randabschluß für ein einfaches zylindrisches Kotflügelblech.

Ein bekannter Schmutzfänger (Deutsche Offenlegungsschrift 1 755 262) besteht aus einem hinter dem Fahrzeugrad hängend anzubringenden biegsamen Lappen, dessen dem Rand zugewandte Seite mit einer Anzahl etwa parallel zu den Umfangslinien des Rads verlaufenden Rippen oder Rillen versehen ist. Infolge seines Rippenprofils ist der bekannte Schmutzfänger selbstreinigend; er hat jedoch keine Wirkung bei der Unterdrückung von seitlichem Spritzwasser.

Demgegenüber liegt der vorliegenden Erfindung die Aufgabe zugrunde, einen Kotflügel mit einem gegen seitliches Absprühen wirksamen Spritzschutzrand zu schaffen, der eine selbstreinigende Wirkung auch bei Schnee, Schneematsch oder stark verschmutzter Fahrbahn gewährleistet.

Erfindungsgemäß wird diese Aufgabe dadurch gelöst, daß im Bereich des Spritzschutzrandes der gegenseitige Abstand und die Höhe der Rippen von innen nach außen abnehmen.

Infolge der unterschiedlichen Tiefe und Breite der zwischen den Rippen gebildeten Rillen, und zwar mit von innen nach außen abnehmender Rillengröße ist es möglich, die selbstreinigende Wirkung über die gesamte Breite des Spritzschutzrands zu erzielen. Die Rillengröße ist dabei der Tröpfchengröße angepaßt, welche von innen nach außen abnimmt.

Infolge der radialen Erstreckung des Spritzschutzrandes wird das seitliche Spritzwasser wirkungsvoll abgefangen. Die Wassertröpfchen werden in den zwischen den Rippen gebildeten Rillen gesammelt und längs der Rillen abgeleitet.

Für die selbstreinigende Wirkung, und damit für die Aufrechterhaltung der Spritzschutzfunktion des neuerungsgemäßen Spritzschutzrands ist ein Rippenquerschnitt besonders vorteilhaft, der aus spitzwinkelig zusammenlaufenden Flanken besteht.

Der erfindungsgemäße Spritzschutzrand kann als gesondert hergestelltes Teil mit einem im wesentlichen zylindrischen Kotflügelabschnitt verbunden sein. Dabei ist zweckmäßig, daß der Rand und der zylindrische Abschnitt des Kotflügels aus unterschiedlichen Werkstoffen bestehen; vorteilhaft besteht der zylindrische Abschnitt aus Blech, der Kotflügelrand aus Gummi. Zur Verbindung beider Teile wird ein Verbindungswulst des Kotflügelrands in einen entsprechenden Falz des zylindrischen Kotflügelabschnitts eingesetzt und dort durch einen Spanndraht niedergespannt.

Im Rahmen der Erfindung besteht auch die Möglichkeit, daß der zylindrische Abschnitt des Kotflügels und dessen Spitzschutzrand einteilig hergestellt sind, bevorzugt aus Gummi oder Kunststoff, im letzteren Fall beispielsweise aus geschäumten Polyurethan, ggf. mit versteifender Fasereinlage, oder thermoplastischen Kunststoff. Schließlich kommen auch Blechkotflügel in Frage, die an ihrer Innenseite mit dem erfindungsgemäßen Spritzschutzprofil aus Gummi oder Kunststoff beschichtet sind.

Durch die erfindungsgemäß vorgeschlagenen spezielle Rippenform wird erreicht, daß die vom Reifenprofil abgeschleuderten Tropfen im Bereich des Rippenprofils bei ihrem Aufprall weniger stark zerkleinert und vernebelt werden; das in den Rillen zwischen den Rippen abgeschiedene Tröpfchenwasser kann dort ungestört ablaufen, da der Rillenhohlraum durch die vorspringenden Rippen gegen eine quer zur Fahrtrichtung verlaufende Luftströmung geschützt ist.

Selbstverständlich kann im Bereich eines LKW-Reifens, dessen Kotflügel mit dem erfindungsgemäßen Spritzschutzrand ausgestattet ist, auch noch ein Spritzschutzlappen vorgesehen sein, welcher auf der Rückseite des Rads bis nahe an die Straßenoberfläche reichend, angeordnet ist und ein dem Spritzschutzrand entsprechendes Profil aufweist.

Im folgenden wird ein Ausführungsbeispiel der Erfindung anhand der Zeichnung beschrieben. Es zeigt

Fig. 1 einen Querschnitt durch den Spritzschutzrand,

Fig. 2 einen Kotflügel mit Spritzschutzrand in der Seitenansicht und

Fig. 3 einen Querschnitt durch einen Kotflügel mit Spritzschutzprofil.

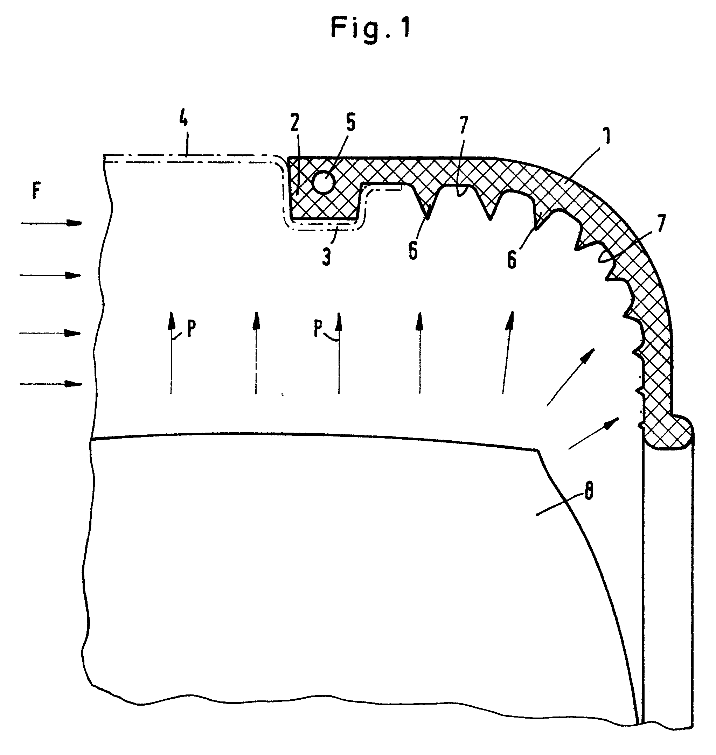

Gemäß Fig. 1 besitzt der Spritzschutzrand 1 an seinem inneren Ende einen umlaufenden Wulst 2 welcher in einem Falz 3 eines zylindrischen Kotflügelprofils 4 aufgenommen ist. Während das Kotflügelprofil 4 zweckmäßig aus Blech geformt ist, besteht der Spritzschutzrand 1 bevorzugt aus Gummi. Im Bereich der Bohrung 5 im Inneren des Wulstes 2 ist der Spritzschutzrand mittels eines nicht dargestellten, durch die Bohrung gefädelten Spanndrahts niedergespannt und dadurch mit dem Kotflügel 4 fest verbunden. Auf seiner dem Rad zugewandten Seite weist der Spritzschutzrand 1 Rippen 6 auf, zwischen denen Rillen 7 gebildet sind. Das von den ebenfalls mit einer strichpunktierten Linie angedeutete Reifenprofil 8 in Richtung der Pfeile P abgeschleuderte Wasser wird vom Innenprofil des Spritzschutzrandes 1 aufgefangen und in den Rillen 7, welche in Umfangsrichtung des Rades verlaufen, abgeleitet. Die gefürchtete Sprühnebelbildung wird dadurch wirksam unterdrückt. Der Rippenquerschnitt entspricht einem spitzwinkeligen Dreieck mit leicht gerundeter Spitze. Das Spritzwasser wird an den Rippenflanken ohne zusätzliche Zerstäubung in die Rillen 7 abgeleitet.

Dies gilt auch für Wasserteilchen, welche in Richtung der Radachse, also etwa gemäß den Pfeilen F von irgendwelchen Prallflächen des LKW-Aufbaus abgespritzt werden. Das Rippenprofil ist im übrigen der Tröpfchengröße angepaßt. Entsprechend der von innen nach außen abnehmenden Tröpfchengröße nehmen auch die Rippen 6 bzw. die Rillen 7 in ihrem Querschnitt von innen nach außen ab. Dadurch gelingt es, das Rippenprofil auch im Außenbereich stets sauber zu halten, d. h. die dort vorherrschenden kleinen Tröpfchen sind ausreichend, um die erforderliche selbstreinigende Wirkung im Bereich der flacheren äußeren Rillen aufrechtzuerhalten.

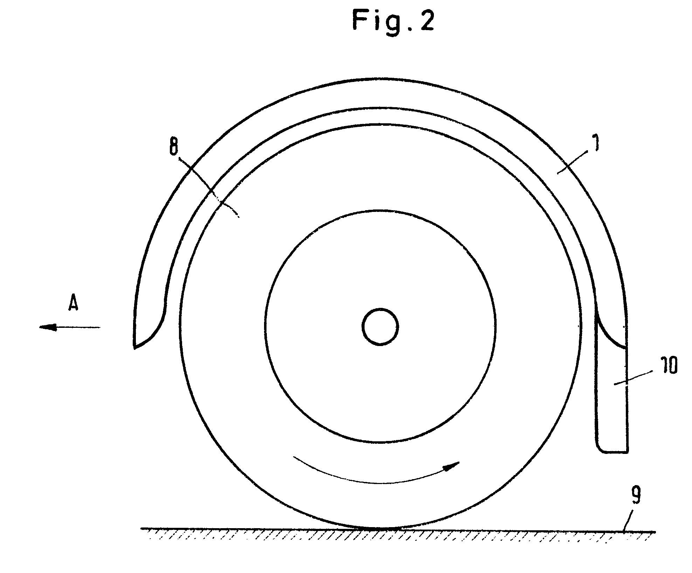

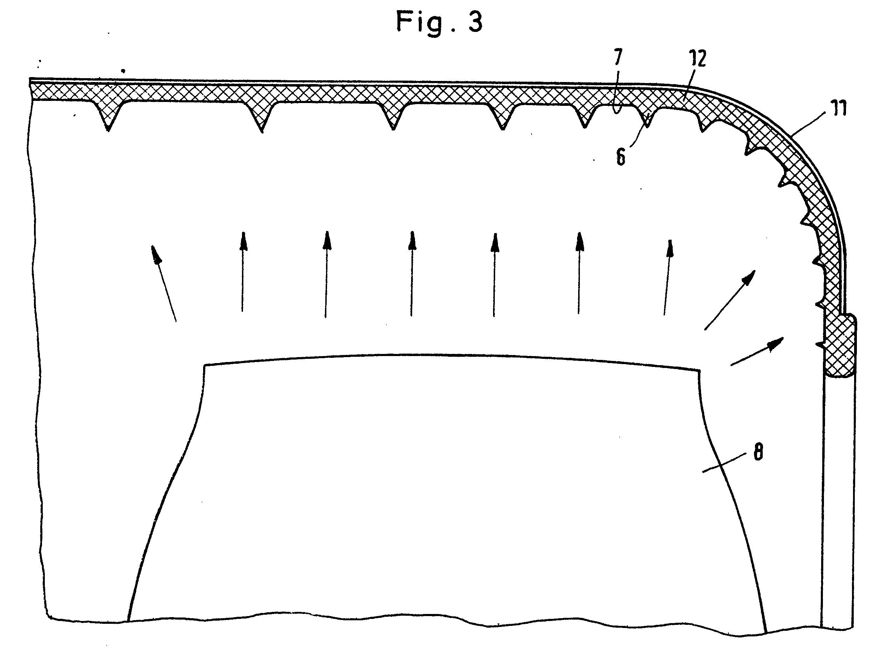

Eine besonders wirkungsvolle, wenn auch etwas aufwendigere Ausführungsform der erfindungsgemäßen Schutzvorrichtung gegen Sprühen und Vernebeln von durch das Reifenprofil aufgenommenem Regenwasser ist in Fig. 2 dargestellt. Auf der bezüglich der Fahrrichtung A rückwärtigen Seite des Rads 8 besitzt der Kotflügel zur Straße 9 hin eine Verlängerung in Form eines Spritzschutzlappens 10, welcher vollständig aus flexiblem Kunststoffmaterial oder Gummi gefertigt ist und auf der Innenseite das Rippenprofil des Kotflügelrands 1 fortsetzt. Insgesamt stellt die Verlängerung 10 eine Fortsetzung des Kotflügels in einer Richtung senkrecht zur Straßenoberfläche dar. In einer Variante kann die Verlängerung auch zusammengesetzt sein aus einer ebenen Blechplatine, an welche ein geradliniger Spritzschutzrand mit einer in Fig. 1 dargestellten Profilierung angeschlossen ist. Fig.3 zeigt einen Blechkotflügel, dessen Blechmantel 11 an seiner Innenseite mit einem Spritzschutzprofil 12 aus Kunststoff ausgekleidet ist. Bei dieser Ausführungsform ist das Spritzschutzprofil 12 über den Randbereich des Kotflügels hinaus auf die gesamte innere Oberfläche des Kotflügels erstreckt. Bei Verwendung eines entsprechend steifen Kunststoffmaterials kann der Blechmantel 11 auch weggelassen werden, so daß ein reiner Kunststoffflügel vorliegt.

## Patentansprüche

1. Kotflügel für Kraftfahrzeuge, insbesondere Lastkraftwagen, mit einem im Kotflügelaußenbereich angeordneten Spritzschutzrand (1), der an seiner Außenseite radial eingezogen ist, wobei der Kotflügel an seiner dem Rad (8) zugewandten Seite mit in Umfangsrichtung des Rades verlaufenden Rippen (6) versehen ist, dadurch gekennzeichnet, daß im Bereich des Spritzschutzrands (1) der gegenseitige Abstand und die Höhe der Rippen (6) von innen nach außen abnehmen.

2. Kotflügel nach Anspruch 1, dadurch gekennzeichnet, daß die Rippen (6) jeweils zwei spitzwinkelig zusammenlaufende Flanken bilden.

3. Kotflügel nach Anspruch 1, dadurch gekennzeichnet, daß der Rand (1) als gesondert hergestelltes Teil mit einem im wesentlichen zylindrischen Kotflügelabschnitt (4) verbunden ist.

4. Kotflügel nach einem der Ansprüche 1 bis 3, dadurch gekennzeichnet, daß der Rand (1) und der zylindrische Abschnitt (4) des Kotflügels aus unterschiedlichen Werkstoffen bestehen.

5. Kotflügel nach einem der Ansprüche 1 bis 4, dadurch gekennzeichnet, daß sich ein Spritzschutzprofil mit einer dem Rand entsprechenden Rippenform im wesentlichen über die gesamte Innenseite des Kotflügels erstreckt.

## Claims

1. A mudguard for motor vehicles, particularly lorries, with a spray protection rim (1) fitted to the outside of the mudguard, the rim extending inwardly radially towards the outside edge, in which the side of the mudguard facing the wheel (8) is provided with ribs (6) running in the peripheral direction of the wheel, characterized in that the spacing and height of the ribs (6) in the area of the spray protection rim (1) decreases towards the outside.

2. A mudgurad according to claim 1, characterized in that the ribs (6) are each formed by two flanks converging at an acute angle.

3. A mudguard according to claim 1, characterized in that the rim (1) is connected to an essentially cylindrical mudguard section (4) as a component manufactured separately.

4. A mudguard according to any of claims 1 to 3, characterized in that the rim (1) and the cylindrical section (4) of the mudguard are made from different materials.

5. A mudguard according to any of claims 1 to 4, characterized in that a spray protection profile with a ribbed form matching the rim covers to a large extent the whole of the inner side of the mudguard.

## Revendications

1. Garde-boue pour véhicules à moteur, notamment pour camions, comportant un bord pare-éclaboussures (1) disposé dans la région extérieure du garde-boue et resserré radialement à son côté extérieur, le garde-boue étant muni, à son côté tourné vers la roue (8), de nervures situées dans la direction circonférentielle de la roue, caractérisé en ce que dans la région du bord pareéclaboussures (1), l'espacement mutuel et la hauteur des nervures (6) diminuent de l'intérieur vers l'extérieur.

2. Garde-boue selon la revendication 1, caractérisé en ce que les nervures (6) forment chacune deux flancs se réunissant à angle aigu.

3. Garde-boue selon la revendication 1, caractérisé en ce que le bord (1), en tant que pièce fabriquée séparément, est relié à une partie pratiquement cylindrique de garde-boue (4).

4. Garde-boue selon l'une des revendications 1 à 3, caractérisé en ce que le bord (1) et la partie cylindrique (4) du garde-boue sont formés de matériaux différents.

5. Garde-boue selon l'une des revendications 1 à 4, caractérisé en ce qu'un profilé pare-éclaboussures présentant une forme de nervures correspondant au bord s'étend pratiquement sur la totalité du côté intérieur du garde-boue.

# Fig.1

# Fig. 2

# Fig. 3

0 062 137